Europäisches Patentamt

European Patent Office

Office européen des brevets

(11) Numéro de publication: **0 292 379 B1**

# (12) FASCICULE DE BREVET EUROPEEN

(45) Date de publication de fascicule du brevet: **22.07.92** (51) Int. Cl.⁵: **G09B 9/00**

(21) Numéro de dépôt: **88401198.2**

(22) Date de dépôt: **18.05.88**

(54) **Procédé de création, notamment dans le champ gravitationnel terrestre, de conditions de microgravité, et appareil de mise en oeuvre de ce procédé.**

(30) Priorité: **19.05.87 FR 8706999**

(43) Date de publication de la demande:
**23.11.88 Bulletin 88/47**

(45) Mention de la délivrance du brevet:
**22.07.92 Bulletin 92/30**

(84) Etats contractants désignés:
**AT BE CH DE ES GB GR IT LI LU NL SE**

(56) Documents cités:
**DE-A- 3 320 262
US-A- 3 479 883
US-A- 3 900 195**

(73) Titulaire: **AGENCE SPATIALE EUROPEENNE
8-10, rue Mario Nikis
F-75738 Paris Cedex 15(FR)**

(72) Inventeur: **Mesland, Dick
Ch. van Montpensierlaan 19
NL-1181 RN Amstelveen(NL)**

(74) Mandataire: **Ores, Irène et al
CABINET ORES 6, Avenue de Messine
F-75008 Paris(FR)**

EP 0 292 379 B1

Rank Xerox (UK) Business Services

## Description

La présente invention est relative à un procédé de soumission à des conditions de microgravité d'un système - plus particulièrement constitué d'une culture cellulaire - normalement soumis à l'action d'un champ gravitationnel.

L'invention se rapporte également à un appareil pour la mise en oeuvre de ce procédé.

Les processus biologiques dans l'espace constituent une nouvelle discipline dans le domaine de la biotechnologie et sont d'un intérêt toujours croissant dans le monde industrialisé, particulièrement en ce qui concerne la fabrication de produits pharmaceutiques.

En ce qui concerne les avantages potentiels de la culture,de la purification et de la transformation des cellules animales et humaines, ainsi que des produits obtenus par l'intermédiaire de ces opérations, en conditions de microgravité, ceux-ci ont été et seront évalués à l'occasion d'un programme d'investigations spéciales promu par la NASA, l'ESA, l'INDUSTRIE et les LABORATOIRES DE RECHERCHE à bord de SPACELAB.

En particulier, l'intérêt des industriels est principalement concentré sur le développement des techniques de séparation (des protéines, des cellules, etc...) et des techniques de culture de cellules,telles que des microorganismes ou des cellules animales et humaines.

Les expérimentations effectuées jusqu'à maintenant sur les cellules animales et humaines ont montré, sans ambiguïté , que les cellules vivantes sont sensibles à la gravité et que, en conditions de microgravité elles présentent un rythme de division cellulaire (prolifération) altéré par rapport à ce qui se passe dans un champ gravitationnel.

Les cellules pourvues de motilité,telles que le Paramecium aurelia,présentent, en condition de microgravité, un rythme de prolifération plus élevé mais une quantité de protéines synthétisées moindre, tandis que les cellules qui ne sont pas pourvues de motilité, telles que les lymphocytes, présentent, en conditions de microgravité, un taux de prolifération inférieur et une quantité d'interféron synthétisé plus élevée.

On comprend donc aisément qu'une prolifération réduite,combinée à une moindre consommation énergétique (cette réduction énergétique résultant du fait, que les cellules n'ont à accomplir aucun travail contre la gravité), pourrait permettre une production plus importante, en conditions de microgravité, de produits cellulaires, notamment nécessaires à l'industrie pharmaceutique.

Dés lors, on comprend également que,s'il était possible de réaliser des conditions de microgravité dans des installations soumises au champ gravitationnel terrestre, la recherche scientifique,ainsi que les applications industrielles des techniques de cultures cellulaires dans ces conditions, seraient considérablement simplifiées.

Or, en ce qui concerne la soumission d'un système,a priori quelconque, à des conditions de microgravité, il y a lieu de noter que ces conditions peuvent être obtenues seulement si le système concerné se trouve en condition de chute libre, à savoir seulement si la force de gravité n'est pas contrebalancée (ou équilibrée) par une autre force (quelle que soit la nature de la force d'équilibrage).

Actuellement différentes méthodes sont connues pour soumettre un système quelconque à des conditions de microgravité pendant une période donnée; en particulier,on connaît la méthode suivante :

a) chute du système à partir du sommet d'une tour dite d'impesanteur ;

b) mise du système à l'intérieur d'un aéroplane suivant la trajectoire d'un vol balistique (cf. dans ESA Bulletin, n° 42, Mai 1983, l'article "Parabolic Aircraft Flights-An effective Tool in preparing Microgravity Experiments").

c) mise du système dans une fusée suivant une trajectoire d'un vol balistique, la plupart de cette trajectoire étant située à l'extérieur de l'atmosphère ;

d) mise du système sur une orbite autour de la terre .

En ce qui concerne la durée des conditions de microgravité réalisées à l'aide des trois premières méthodes a) à c), celle-ci avoisine 5 secondes, 30 secondes et 10 minutes, respectivement.

Toutefois, seulement la quatrième méthode évoquée sous d) pourvoit, en principe, à des conditions de microgravité de durée continuelle.

Etant donné que la culture cellulaire demande, en général,des périodes d'incubation allant de quelques jours à quelques semaines, il est clair que seulement la quatrième méthode peut permettre d'effectuer la culture en conditions de microgravité effective pendant toute la période d'incubation.

Actuellement, il existe seulement une machine qui est capable, et ce jusqu'à un certain degré, de simuler des conditions de microgravité de durée continuelle. Il s'agit du CLINOSTAT,dont le principe est de faire tourner des plantes ou des cellules autour d'un axe horizontal de façon à changer continuellement la direction du vecteur de l'accélération de gravité et à les "désorienter", à savoir à les rendre incapables de sentir l'influence d'un champ gravitationnel agissant dans un sens précis.

Deux versions de cette machine ont été utilisées dans la recherche fondamentale :

1) le CLINOSTAT tournant à faible vitesse, qui est largement utilisé pour l'étude du comportement des plantes en conditions de microgravité (cf. Proc. 2nd European Symposium on Life Sciences Research in Space, Porz Wahn, Germany 4-6 June 1984 (ESA SP-212 - August 1984)),et

2) le CLINOSTAT tournant à grande vitesse, utilisé depuis peu pour étudier le comportement de cellules et de petits organismes en conditions de microgravité (cf. la publication précitée sous 1 ainsi que Proceedings of a workshop on Space Biology, Cologne, Germany 9-11 March 1983 (ESA SP-206, May 1983)).

Toutefois, ces machines présentent deux inconvénients majeurs :

a') elles ne pourvoient pas à des conditions de microgravité effective,

b') lorsqu'elles sont utilisées pour étudier le comportement de cellules, le tube tournant dont se compose chaque type de machine doit présenter un diamètre très petit pour minimiser l'accélération centrifuge (qui agit, évidemment, de façon continuelle).

Mis à part le fait que les résultats obtenus à l'aide d'un CLINOSTAT diffèrent souvent considérablement des résultats obtenus à l'occasion des missions spatiales (cf. en particulier The Physiologist, Vol. 28, No. 6, Suppl.,1985, et The Physiologist, Vol. 28, No. 6, Suppl., 1985), ce qui est probablement dû à l'inconvénient mentionné sous a'), il y a lieu de souligner que la contrainte évoquée sous b' (et constituant un autre inconvénient du CLINOSTAT) prive cette machine de la nécessaire flexibilité expérimentale et en empêche des applications à grande échelle.

La présente invention s'est donc donné pour but de pourvoir à un procédé de Soumission à des conditions de microgravité d'un système, plus particulièrement constitué de cultures cellulaires, et normalement soumis à l'action d'un champ gravitationnel, qui répond mieux aux nécessités de la pratique que les méthodes actuellement connues.

Un autre but de l'invention est de pourvoir à un appareil permettant la mise en oeuvre de ce procédé.

La présente invention a pour objet un procédé de soumission à des conditions de microgravité d'un système, plus particulièrement constitué par une culture cellulaire, et normalement soumis à l'action d'un champ gravitationnel, qui est défini par son vecteur d'accélération de gravité, d'intensité donnée, et qui est plus particulièrement constitué par le champ gravitationnel terrestre, lequel procédé est mis en oeuvre à l'aide d'un appareil stationnaire et est caractérise en ce qu'il comprend les étapes suivantes :

i) impression audit sytème d'une accélération initiale d'intensité appropriée, obtenue en soumettant le système à une phase d'accélération de durée appropriée, laquelle accélération est dirigée suivant une direction inclinée d'un angle également approprié par rapport à la verticale, de façon à faire suivre à ce système dans ledit champ gravitationnel une trajectoire balistique, qui fait suite à la phase d'accélération et qui se déroule suivant une phase ascendante et une phase descendante, dont les durées respectives définissent la durée totale de la phase balistique - à savoir de la phase pendant laquelle le système décrit ladite trajectoire balistique ;

ii) impression répétitive d'une accélération au système à la fin de chaque phase descendante, telle accélération étant appropriée pour faire suivre au système une nouvelle trajectoire balistique, le rapport entre la durée de la phase balistique et la durée de la phase d'accélération étant égal au rapport entre l'intensité de l'accélération imprimée au système et l'intensité de l'accélération de gravité, le nombre de répétitions successives étant approprié pour couvrir une période de temps préfixée.

Selon un mode de réalisation préféré du procédé selon l'invention appliqué à un système constitué par une culture de cellules en suspension, la durée de l'étape ii) est au moins égale à la période d'incubation des cellules et le rapport entre l'intensité de l'accélération imprimée au système et l'intensité de l'accélération de gravité est au moins égale à $n$, avec $\underline{n}$ au moins égal à 1, pour obtenir des conditions de microgravité pendant une durée au moins égale à 10 · $n$% de la période d'incubation correspondante, compte tenu de l'insensibilité des cellules en suspension à des accélérations de courte durée.

Selon un autre mode de réalisation préféré du procédé selon l'invention, l'angle que la direction de l'accélération imprimée audit système forme avec la verticale est égal à zéro, à savoir que ladite trajectoire est verticale.

Selon un mode de réalisation avantageux du procédé conforme à l'invention, l'accélération imprimée audit système est obtenue par air comprimé.

Selon une variante avantageuse de ce mode de réalisation, l'accélération imprimée audit système est obtenue à l'aide d'une force électromagnétique.

La présente Invention a également pour objet un appareil stationnaire pour la mise en oeuvre du procédé selon l'invention, caractérisé en ce qu'il comporte en combinaison :

i*) un moyen destiné à contenir le système à soumettre à des conditions de microgravité ;

ii*) des moyens destinés à soumettre dans un champ gravitationnel, ledit système à une phase d'accélération initiale de durée appropriée pour lui faire suivre une première phase balistique, qui est la phase pendant laquelle le système décrit une trajectoire balistique et qui se compose d'une phase ascendante faisant suite à la phase d'accélération et d'une phase descendante ; lesdits moyens étant aussi destinés, après la première trajectoire balistique, à imprimer audit système de façon répétitive de nouvelles phases d'accélération qui lui font suivre de nouvelles trajectoires balistiques, le rapport entre la durée de la phase balistique et la durée de la phase d'accélération étant égal au rapport entre l'intensité de l'accélération imprimée au système et l'intensité de l'accélération de gravité ;

iii*) des moyens de détection de la direction de mouvement du système, lorsque celui-ci se trouve dans les phases ascendante et descendante de chaque trajectoire balistique, lesquels moyens de détection déclenchent l'intervention des moyens ii*) à la fin de chaque phase descendante.

Selon un premier mode de réalisation avantageux de l'appareil conforme à l'invention , les moyens d'impression répétitive d'accélération audit système, comprennent un dispositif à air comprimé qui est dirigé sur le système par une buse orientée verticalement (de façon à faire suivre au système une trajectoire verticale) et dont le débit est contrôlé par une valve, actionnée - à la fin de chaque phase descendante - par lesdits moyens de détection et est maintenue ouverte pendant le temps nécessaire audit réceptacle pour acquérir l'accélération requise.

Selon une disposition préférée de ce premier mode de réalisation, les moyens de détection comprennent deux capteurs de direction du mouvement du réceptacle contenant ledit système, consistant en deux dispositifs distincts source lumineuse/photo-transistor disposés en alignement vertical, les sources lumineuses et les photo-transistors étant placés de part et d'autre par rapport à la trajectoire verticale du réceptacle, de façon à détecter un premier passage de ce dernier lorsqu'il est dans la phase ascendante de chaque trajectoire et, ensuite, son deuxième passage, lorsqu'il est dans la phase descendante qui lui fait immédiatement suite, la détection du deuxième passage déclenchant l'intervention d'un temporisateur pendant un intervalle de temps égal au temps s'écoulant entre l'instant auquel a lieu ce deuxième passage et la fin de la phase descendante, lorsqu'un dispositif de commande de la valve (électrovalve) de contrôle du débit d'air comprimé est activé pour ouvrir cette valve et la maintenir ouverte pendant un intervalle de temps nécessaire pour imprimer au réceptacle l'accélération requise.

Selon une autre disposition avantageuse de l'appareil conforme à l'invention, les moyens d'impression de ladite accélération au réceptacle contenant la culture de cellules en suspension, coopèrent avec des moyens de réception du réceptacle à la fin de la phase descendante et de guidage vertical de ce réceptable sous l'action du courant d'air comprimé, comportant un siège destiné à recevoir le réceptacle et percé centralement, pour permettre le passage de l'air comprimé, ainsi que des ressorts de support de ce siège disposés symétriquement autour de la trajectoire verticale et fixés à un bâti de support desdits capteurs de direction.

Selon un deuxième mode de réalisation avantageux de l'appareil conforme à l'invention, les moyens d'impression répétitive d'accélération audit système comprennent un électro-aimant agissant sur une tige mobile alignée avec la trajectoire verticale suivie par le réceptacle contenant ledit système.

Selon une disposition avantageuse de ce deuxième mode de réalisation, les moyens de détection comprennent en combinaison :
- un siège fixé à l'extrémité supérieure de la tige mobile et destiné à recevoir le réceptacle à la fin de la phase descendante ;
- un ressort, lui aussi aligné avec la trajectoire verticale, comme la tige mobile de l'électro-aimant, et relié à l'extrémité inférieure de cette tige, l'extrémité inférieure dudit ressort étant solidaire du bâti de l'appareil.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels :
- la figure 1 est une illustration schématique d'un premier mode de réalisation de l'appareil selon l'invention, destiné à la mise en oeuvre du procédé objet de la présente invention ;
- la figure 2 est une illustration, également schématique, d'un autre mode de réalisation de l'appareil pour la mise en oeuvre du procédé conforme à l'invention ;
- la figure 3 montre un diagramme à blocs correspondant aux moyens de détection électronique de la direction de mouvement (ascendante et descendante) d'un système à soumettre à des conditions de microgravité, lorsque celui-ci parcourt chacune des trajectoires balistiques imprimées de façon répétée au système par l'appareil illustré à la figure 1.
- la figure 4 montre un diagramme illustrant, en fonction du temps, les différentes phases de la détection électronique de la direction de mouvement du système parcourant ladite trajectoire balistique.

Il doit être bien entendu, toutefois, que ces dessins et les parties descriptives correspondantes, sont donnés uniquement à titre d'illustration de l'objet de l'invention, dont ils ne constituent en aucune manière une limitation.

La présente invention concerne un procédé visant à soumettre un système, et plus particulièrement une culture de cellules en suspension, normalement soumise à l'action d'un champ gravitationnel, à des conditions de microgravité, dans les termes précisés dans les dispositions qui précèdent.

Sur la base de ces dispositions, il est clair que, bien que les conditions de microgravité créées à l'aide du procédé selon l'invention sont discontinues (ou intermittentes) - à cause du fait que la phase balistique est nécessairement précédée par une phase d'accélération - on peut, en principe, s'approcher à volonté de conditions de microgravité ayant un caractère sensiblement continu, notamment pendant toute la période d'incubation, et ce d'autant plus que les cellules en suspension sont pratiquement insensibles à des accélérations de courte durée : en fait, dans ces conditions, il y a lieu de s'attendre à ce que les périodes de courte durée correspondant à la phase d'accélération n'éliminent pas les effets de la microgravité créée pendant la phase balistique, en sorte que l'on peut dire que, en pratique, le procédé selon l'invention permet de créer des conditions de microgravité pendant sensiblement toute la période d'incubation. Comme démonstration de l'insensibilité des cellules aux accélérations de courte durée, on peut citer la condition selon laquelle les cellules vivantes peuvent être facilement soumises à des accélérations centrifuges égales à plusieurs centaines de fois l'accélération de gravité terrestre par minute, et ce sans ressentir d'effets pratiquement mesurables.

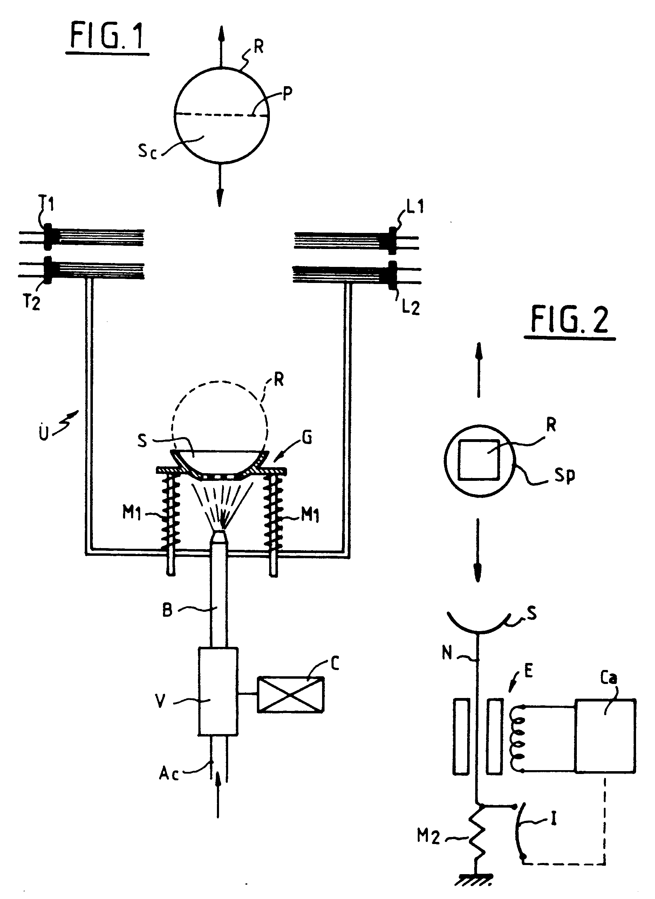

Il y a lieu de préciser, si besoin était, que les conditions de microgravité commencent à la fin de la phase d'accélération (ou propulsion) et durent pendant toute la phase balistique : à ce sujet, on peut utilement se référer en particulier à l'article cité sous b), à la page 2, et notamment à la figure 1, d'où on peut déduire que les conditions de microgravité (ou de "gravité réduite") se manifestent dans une portion ascendante et dans la portion descendante, qui lui fait immédiatement suite, de la trajectoire balistique.

Les considérations qui précèdent justifient l'opinion de la Demanderesse suivant laquelle le procédé de création de conditions de microgravité selon la présente invention, est considéré comme étant particulièrement applicable, de façon spécifique, aux études de cultures cellulaires.

Une valeur typique de la durée que met le système à décrire chaque phase d'accélération et la phase balistique correspondante est approximativement égale à 1 seconde.

Différents appareils peuvent être conçus pour la mise en oeuvre du procédé selon l'invention, deux modes de réalisation, non limitatifs, de ces appareils étant représentés aux figures 1 et 2 .

L'appareil de figure 1 utilise un dispositif à air comprimé provenant d'une conduite Ac pour imprimer à un réceptacle R, contenant la culture de cellules en suspension Sc, l'accélération requise pour éjecter le réceptacle à une hauteur qui est fonction de cette accélération, à savoir pour faire suivre au réceptacle chaque phase ascendante de sa trajectoire qui précède la phase descendante correspondante.

Le débit d'air comprimé fourni par la buse B est maintenu pendant le temps nécessaire au réceptacle R pour acquérir l'accélération voulue et est contrôlé par une valve V.

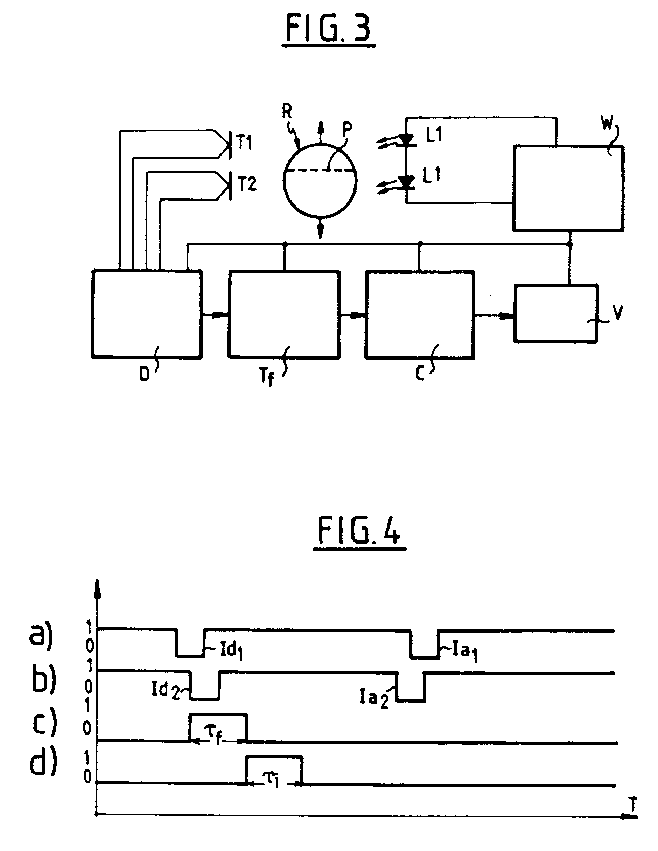

Des moyens de détection D (cf. aussi la figure 3) de la direction de mouvement du réceptacle R comportent deux capteurs de direction photoélectriques, constitués chacun d'une source lumineuse - $L_1$, $L_2$ - et d'un phototransistor - $T_1$ et $T_2$, respectivement.

Le détecteur D coopère avec un temporisateur $T_f$ (dans le sens qui sera décrit plus loin) pour activer le dispositif de commande C de l'électrovalve V, dont l'ouverture est maintenue pendant le temps nécessaire pour imprimer l'accélération appropriée au réceptacle R sous l'action du débit approprié d'air comprimé s'écoulant par la buse B.

De façon plus précise, lorsque le réceptacle R est au point le plus bas de sa trajectoire, (à savoir lorsqu'il se trouve dans la position correspondante à la fin d'une phase descendante), l'air comprimé sortant de la buse 2 imprime à la culture cellulaire une accélération qui lui fait parcourir la phase ascendante de la trajectoire suivante, à laquelle fait suite la phase descendante correspondante dès que le réceptacle a atteint le point le plus haut (sommet) de cette trajectoire, à savoir dès qu'il se trouve à la fin de la phase ascendante.

Les instants de passage du réceptacle R par les positions occupées par les deux capteurs photoélectriques $L_1/T_1$ et $L_2/T_2$, lorsque le réceptacle est dans la phase descendante de sa trajectoire, sont détectés par ces deux capteurs, l'un après l'autre, sous forme d'impulsions $Id_1$ et $Id_2$ (cf. les diagrammes a) et b) de la figure 4 se rapportant aux capteurs de direction $L_1/T_1$ et $L_2/T_2$, respectivement).

Ces passages sont enregistrés par le moyen de détection D, de telle sorte que le passage par la position occupée par le capteur $L_2/T_2$ déclenche le temporisateur $T_f$ pendant l'intervalle de temps $\tau f$ (cf. le diagramme c) de la figure 4) s'écoulant entre ce passage et la fin de la phase descendante, lorsque le dispositif de commande C est activé pour ouvrir l'électrovalve V pendant l'intervalle de temps $\tau_i$ nécessaire pour imprimer au réceptacle R l'accélération initiale requise (cf. le diagramme d) de la figure 4).

Lorsque le réceptacle R se trouve dans la phase ascendante de la trajectoire,qu'il parcourt sous l'action de l'air imprimé, il intercepte les faisceaux lumineux émis par les sources $L_2$ et $L_1$ dans l'ordre, ce premier passage étant détecté sous forme d'impulsions $Ia_2$ et $Ia_1$ (cf. à nouveau les diagrammes a) et b) de la figure 4) et étant enregistré comme tel, à savoir comme détectant la direction de mouvement du réceptacle dirigé vers le haut (à savoir parcourant la phase ascendante de sa trajectoire), le deuxième passage du réceptacle R étant détecté et enregistré comme détectant la direction de mouvement du réceptacle dirigé vers le bas (à savoir parcourant la phase descendante de sa trajectoire), cette deuxième détection seulement autorisant le déclenchement du temporisateur et donc du dispositif de commande de l'électrovalve.

L'alimentation électrique est fournie par le bloc W de la figure 3.

L'appareil de la figure 1 peut comporter des moyens de réception et de guidage G du réceptacle R à la fin de la phase descendante, comprenant un site S pour le réceptacle,qui est percé centralement pour permettre le passage de l'air comprimé et qui est supporté par des ressorts $M_1$ disposés symétriquement autour de la trajectoire ascendante (verticale) parcourue par le réceptacle et fixé à un bâti U de support des capteurs de direction $L_1/T_1$ et$L_2/T_2$.

La figure 2 montre une autre forme de réalisation d'un appareil de mise en oeuvre du procédé conforme à l'invention. Ce deuxième appareil diffère de l'appareil illustré à la figure 1 essentiellement en ce qui concerne les moyens d'impression de l'accélération voulue à la culture cellulaire et les moyens de détection.

De façon plus précise, dans ce deuxième appareil, les moyens d'impression de l'accélération, à la fin de chaque phase descendante, sont constitués par un électro-aimant E agissant sur une tige mobile N alignée avec la trajectoire ascendante (verticale) parcourue par le réceptacle R.

A l'extrémité supérieure du noyau est fixé un siège S destiné à recevoir le réceptacle R à la fin de la phase descendante, tandis que son extrémité inférieure est reliée à un ressort $M_2$, lui aussi aligné avec la trajectoire ascendante (verticale) précitée.

Un interrupteur I,faisant partie d'un circuit d'activation Ca de l'électro-aimant E, est actionné par l'impact du réceptacle R sur le siège S à la fin de la phase descendante, ce qui permet d'activer l'électroaimant précité et d'imprimer, par l'intermédiaire de la tige verticale N , la force nécessaire pour imprimer au réceptacle R l'accélération requise pour faire suivre à celui-ci la trajectoire voulue.

Dans chaque cas, on peut utiliser un réceptacle pour contenir la culture de cellules en suspension qui peut être a priori quelconque, mais qui de préférence est sphérique et réalisé en un matériau biocompatible, tel que le TEFLON[R], ayant un poids relativement réduit de façon à convenir dans le cadre de l'appareil à air comprimé illustré à la figure 1. Toutefois, rien n'empêche d'utiliser un matériau rigide ayant, comme déjà évoqué plus haut, une forme quelconque, et réalisé en un matériau biocompatible quelconque mais disposé à l'intérieur d'une sphère élastique Sp: bien entendu, dans ce cas, des forces plus importantes sont requises pour lancer le réceptacle contenant la culture de cellules en suspension, ce qui signifie que ce deuxième type de réceptacle est susceptible d'être utilisé dans le cadre de l'appareil illustré à la figure 2.

Quelle que soit la forme (sphérique, parallélépipédique, etc...) du réceptacle de la culture de cellules en suspension, une cloison constituée par une membrane P perméable à l'air est disposée dans le réceptacle, de façon à séparer la culture cellulaire de l'air.

De plus, dans chaque cas, l'appareil utilisé pour la mise en oeuvre du procédé selon l'invention devrait soumettre le réceptacle contenant la culture cellulaire (et ce de préférence automatiquement) à des mouvements lents, de façon à changer continuellement l'orientation du vecteur de l'accélération à laquelle ce réceptacle est soumis pendant la phase ascendante précitée, et ce pour éviter l'éventuelle intégration des effets liés à la gravité.

En outre, bien que dans les exemples qui précèdent, il est supposé que l'accélération imprimée à la culture cellulaire à la fin de chaque phase descendante (et donc au début de la phase ascendante suivante) est toujours la même, rien n'empêche de changer l'accélération , par exemple par paliers, en passant d'une trajectoire à la suivante.

**Revendications**

1. Procédé de soumission à des conditions de microgravité d'un système, normalement soumis à l'action d'un champ gravitationnel défini par son vecteur d'accélération de gravité, d'intensité donnée, et plus particulièrement constitué par le champ gravitationnel terrestre, lequel procédé est mis en oeuvre à l'aide d'un appareil stationnaire et est caractérisé en ce qu'il comprend les étapes suivantes :

    i) impression audit système d'une accélération initiale d'intensité appropriée, obtenue en soumettant le système à une phase d'accélération de durée appropriée, laquelle accélération est dirigée suivant une direction inclinée d'un angle également approprié par rapport à la verticale, de façon à faire suivre à ce dernier dans ledit champ gravitationnel une trajectoire balistique, qui fait suite à la phase d'accélération et qui se déroule suivant une phase ascendante et une phase descendante, dont les durées respectives définissent la durée totale de la phase balistique, à savoir de la phase pendant laquelle le système décrit ladite trajectoire balistique ;

ii) impression répétitive d'une accélération au système à la fin de chaque phase descendante, telle accélération étant appropriée pour faire suivre au système une nouvelle trajectoire balistique, le rapport entre la durée de la phase balistique et la durée de la phase d'accélération étant égal au rapport entre l'intensité de l'accélération imprimée au système et l'intensité de l'accélération de gravité, le nombre de répétitions successives étant approprié pour couvrir une période de temps préfixée.

2. Procédé selon la revendication 1, caractérisé en ce que lorsque le système est constitué par une culture de cellules en suspension, la durée de l'étape ii) est au moins égale à la période d'incubation des cellules et le rapport entre l'intensité de l'accélération imprimée au système et l'intensité de l'accélération de gravité est au moins égal à n, avec n au moins égal à 1, pour obtenir des conditions de microgravité pendant une durée au moins égale à $10 \cdot n\%$ de la période d'incubation.

3. Procédé selon l'une quelconque des revendications 1 ou 2, caractérisé en ce que l'angle que la direction de l'accélération imprimée audit système forme avec la verticale est égal à zéro, à savoir que ladite trajectoire est verticale.

4. Procédé selon l'une quelconque des revendications 1, 2 ou 3, caractérisé en ce que l'accélération imprimée audit système est obtenue par air comprimé.

5. Procédé selon l'une quelconque des revendications 1, 2, ou 3, caractérisé en ce que l'accélération imprimée audit système est obtenue à l'aide d'une force électromagnétique.

6. Appareil stationnaire pour la mise en oeuvre du procédé selon l'une quelconque des revendications 1 à 5, caractérisé en ce qu'il comporte en combinaison :

i*) un moyen (R) destiné à contenir le système (Sc) à soumettre à des conditions de microgravité ;

ii*) des moyens (Ac, B, C, E ; Ca, E) destinés à soumettre dans un champ gravitationnel ledit système à une phase d'accélération initiale de durée appropriée pour lui faire suivre une première phase balistique, qui est la phase pendant laquelle le système décrit une trajectoire balistique et qui se compose d'une phase ascendante faisant suite à la phase d'accélération et d'une phase descendante ; lesdits moyens (Ac, B, C, E ; Ca, E) étant aussi destinés, après la première trajectoire balistique, à imprimer audit système de façon répétitive de nouvelles phases d'accélération qui lui font suivre de nouvelles trajectoires balistiques, le rapport entre la durée de la phase balistique et la durée de la phase d'accélération étant égal au rapport entre l'intensité de l'accélération imprimée au système et l'intensité de l'accélération de gravité ;

iii*) des moyens de détection ($T_1/L_1$, $T_2/L_2$, D ; S, $M_2$, I) de la direction de mouvement du système, lorsque celui-ci se trouve dans les phases ascendante et descendante de chaque trajectoire balistique, lesquels moyens de détection déclenchent l'intervention des moyens ii*) à la fin de chaque phase descendante.

7. Appareil selon la revendication 6, caractérisé en ce que les moyens d'impression répétitive d'accélération audit système, comprennent un dispositif à air comprimé qui est dirigé sur le système par une buse (B) orientée verticalement (de façon à faire suivre au système une trajectoire verticale) et dont le débit est contrôlé par une valve (V), actionnée à la fin de chaque phase descendante par lesdits moyens de détection et est maintenu pendant le temps nécessaire audit réceptacle (R) d'acquérir l'accélération requise.

8. Appareil selon la revendication 7, caractérisé en ce que les moyens de détection comprennent deux capteurs de direction du mouvement du réceptacle (R) contenant ledit système, consistant en deux dispositifs distincts source lumineuse/photo-transistor ($L_1/T_1$, $L_2/T_2$) disposés en alignement vertical, les sources lumineuses ($L_1/L_2$) et les photo-transistors ($T_1$, $T_2$) étant placés de part et d'autre par rapport à la trajectoire verticale du réceptacle (R), de façon à détecter le premier passage de ce dernier lorsqu'il est dans la phase ascendante et ensuite son deuxième passage, lorsqu'il est dans la phase descendante, la détection du deuxième passage déclenchant un temporisateur ($T_f$) pendant un intervalle de temps ($\tau_f$) égal au temps s'écoulant entre l'instant auquel a lieu ce deuxième passage et la fin de la phase descendante, lorsqu'un dispositif de commande (C) de la valve (V, électrovalve) de contrôle du débit d'air est activé pour ouvrir cette valve et la maintenir ouverte pendant un intervalle de temps ($\tau_i$), nécessaire pour imprimer au réceptacle (R) l'accélération requise.

9. Appareil selon l'une quelconque des revendications 7 ou 8, caractérisé en ce que les moyens d'impression (Ac, B, C, V) de ladite accélération au réceptacle (R) contenant la culture de cellules en suspension, coopèrent avec des moyens (G) de réception du réceptacle (R) à la fin de la phase descendante et de guidage vertical de ce réceptacle sous l'action du courant d'air comprimé, comportant un siège (S) destiné à recevoir le réceptacle et percé centralement, pour permettre le passage de l'air comprimé, ainsi que des ressorts ($M_1$) de support de ce siège disposés symétriquement autour de la trajectoire verticale et fixés à un bâti (U) de support desdits capteurs de direction ($L_1/T_1$, $L_2/T_2$).

10. Appareil selon la revendication 6, caractérisé en ce que les moyens d'impression répétitive d'accélération audit système comprennent un électroaimant (E) agissant sur une tige mobile (N) alignée avec la trajectoire verticale suivie par le réceptacle (R) contenant ledit système.

11. Appareil selon la revendication 10, caractérisé en ce que les moyens de détection comprennent en combinaison :
    - un siège (S) fixé à l'extrémité supérieure de la tige mobile (N) et destiné à recevoir le réceptable (R) à la fin de la phase descendante ;
    - un ressort ($M_2$), lui aussi aligné avec la trajectoire verticale, comme la tige mobile (N) de l'électro-aimant (E), et relié à l'extrémité inférieure de cette tige, l'extrémité inférieure dudit ressort ($M_2$) étant solidaire du bâti de l'appareil.

## Claims

1. A process for submitting to conditions of microgravity a system, normally submitted to the influence of a gravitational field defined by its gravity acceleration vector, of given intensity, and more particularly made up by the earth's gravitational field, which process is implemented through a stationary apparatus and is characterized in that it comprises the following steps:

    i) conferring to said system an initial acceleration of appropriate intensity, obtained by submitting the system to an acceleration phase of appropriate duration, which acceleration is oriented towards a titled direction with an equally appropriate angle with the vertical, so as to have this system in said gravitational field follow a ballistic trajectory after the acceleration phase and which takes place according to an ascending phase and a descending phase, whose respective durations define the total duration of the ballistic phase -i.e. of the phase during which the system follows said ballistic trajectory;

    ii) repeatdly conferring an acceleration to the system at the end of each descending phase, said acceleration being appropriate so as to have the system follow a new ballistic trajectory, the ratio between the duration of the ballistic phase and the duration of the acceleration phase being equal to the ratio between the intensity of the system's initial acceleration and the intensity of the gravity acceleration, this being appropriately repeated to cover a predetermined time period.

2. Process according to claim 1, characterized in that when the system is made up by a suspension of cell culture, the duration of step ii) is at least equal to the cell's incubation period and the ratio between the intensity of the acceleration conferred to the system and the intensity of the gravity acceleration is at least equal to n, with n at least equal to 1, so as to obtain microgravity conditions for a period of time at least equal to 10 . n % of the incubation period.

3. Process according to any of preceding claims 1 or 2, characterized in that the angle formed by the direction of the acceleration conferred to said system with the vertical equals zero, in other words in that said trajectory is vertical.

4. Process according to any of preceding claims 1, 2 or 3, characterized in that the acceleration conferred to said system is obtained with compressed air.

5. Process according to any of preceding claims 1, 2 or 3, characterized in that the acceleration conferred to said system is obtained with an electromagnetic force.

6. A stationary apparatus for implementing the process according to any preceding claims 1 to 5, characterized in that it comprises a combination of:

i*) a means (R) containing the system (Sc) to be submitted to microgravity conditions;

ii*) a means (Ac, B, C, E ; Ca, E) for submitting in a gravitational field said system to an initial acceleration phase of appropriate duration causing it to follow a first ballistic phase which is the phase during which the system follows a ballistic trajectory and which comprises an ascending phase following the acceleration phase, and a descending phase; said means (Ac, B, C, C, E; Ca, E) being also used, after said first ballistic trajectory, to repeatedly confer to the system, new acceleration phases causing it to follow new ballistic trajectories, the ratio between the duration of the ballistic phase and the duration of the acceleration phase being equal to the ratio between the intensity of the acceleration conferred to the system and the intensity of the gravity acceleration;

iii*) means (T1/L1, T2/L2, D ; S, M2, I) for detecting the direction in which the system moves when it is in the ascending and descending phases of each ballistic trajectory, which detecting means trigger means ii*) at the end of each descending phase.

7. Apparatus according to claim 6, characterized in that the means for repeatedly conferring an acceleration to said system comprise a compressed air device directed towards the system by a vertically oriented nozzle (B) (so as to have the system follow a vertical trajectory) and whose flow rate is monitored by a valve (V), said valve being driven - at the end of each descending phase - by said detecting means and being maintained during enough time for said receptacle (R) to obtain the required acceleration.

8. Apparatus according to claim 7, characterized in that the detecting means comprise two gauges for determining the direction of movement of receptacle (R) containing said system, consisting of two separate light source/phototransistor devices (L1/T1, L2/T2) arranged in a vertical line, the light sources (L1/L2) and phototransistors (T1,T2) being placed on each side of the receptacle (R)'s vertical trajectory, so as to detect a first passage of the latter when it is in the ascending phase and later its second passage when it is in the descending phase, the detection of the second passage triggering a temporizer (Tf) during a time interval ($t_f$) equal to the time elapsed between this second passage and the end of the descending phase, at which time a device (C) for controlling the valve (V, electrovalve) for monitoring the flow rate of compressed air is trigerred to open this valve and keep it open during the necessary time interval ($t_i$) to give the receptacle (R) the required acceleration.

9. Apparatus according to claim 7 or 8, characterized in that the means (Ac, B, C, V) for conferring said acceleration to the receptacle (R) containing the suspension of cell culture, cooperate with means (G) for receiving the receptacle (R) at the end of the descending phase and for vertically guiding this receptacle under the influence of the compressed air flow, comprising a seat (S) for receiving the receptacle, which is centrally perforated to allow the passage of compressed air, as well as springs (M1) for supporting this seat, symetrically arranged around the vertical trajectory and secured to a supporting frame (U) for said direction gauges (L1/T1,L2/T2).

10. Apparatus according to claim 6, characterized in that the means for repeatedly conferring an acceleration to said system comprise an electromagnet (E) acting upon a mobile rod (N) in line with the vertical trajectory followed by receptacle (R) containing said system.

11. Apparatus according to claim 10, characterized in that the detection means comprise a combination of:

- a seat (S) secured to the upper end of the mobile rod (N) and intended for receiving receptacle (R) at the end of the descending phase;

- a spring (M2), also in line with the vertical trajectory like the electromagnet (E)'s mobile rod of the electromagnet (B), and connected to the lower end of this rod, the lower end of said spring (M2) being fixed to the apparatus's frame.

**Patentansprüche**

1. Verfahren, um ein System, das üblicherweise der Wirkung eines Gravitationsfeldes unterworfen ist, durch seinen Vektor für Gravitationsbeschleunigung gegebener Größe definiert ist und insbesondere von dem Erdgravitationsfeld gebildet ist, Bedingungen einer Mikrogravitation zu unterwerfen, wobei das Verfahren mit Hilfe einer ortsfesten Einrichtung durchgeführt wird und dadurch gekennzeichnet ist, daß dieses die folgenden Stufen umfaßt:

i) eine Anfangsbeschleunigung geeigneter Größe wird dem System erteilt, die durch Unterwerfen des Systems einer Beschleunigungsphase mit geeigneter Dauer erhalten wird, wobei diese Beschleunigung entlang einer um einen geeigneten Winkel bezüglich der Vertikale geneigten Richtung so gerichtet wird, daß dieses letztere in dem Gravitationsfeld einer Wurfbahn folgt, die auf die Beschleunigungsphase folgt und die entsprechend einer aufsteigenden Phase und einer absteigenden Phase verläuft, deren entsprechende Dauer die Gesamtdauer der Wurfphase, das heißt jener Phase definieren, während welcher das System die Wurfbahn beschreibt,

ii) eine Beschleunigung wird zu dem Ende jeder absteigenden Phase dem System wiederholend erteilt, wobei eine solche Beschleunigung geeignet ist, das System einer neuen Wurfbahn folgen zu lassen, das Verhältnis zwischen der Dauer der Wurfphase und der Dauer der Beschleunigungsphase gleich ist dem Verhältnis zwischen der Größe der dem System erteilten Beschleunigung und der Größe der Gravitationsbeschleunigung und die Anzahl aufeinanderfolgender Wiederholungen geeignet ist, eine vorbestimmte Zeitperiode zu überdecken.

2. Verfahren nach Anspruch 1, dadurch gekennzeichnet, daß die Dauer der Stufe ii) zumindest gleich ist der Inkubationszeit von Zellen und das Verhältnis zwischen der Größe der dem System erteilten Beschleunigung und der Intensität der Gravitationsbeschleunigung zumindest gleich n, wenn das System aus einer Kultur von Zellen in Suspension besteht, wobei n zumindest gleich 1, um während einer Zeitdauer Bedingungen für eine Mikroschwerkraft zu erhalten, die gleich ist 10 . n % der Inkubationszeit.

3. Verfahren nach irgend einem der Ansprüche 1 oder 2, dadurch gekennzeichnet, daß der Winkel, welchen die Richtung der dem System erteilten Beschleunigung mit der Vertikale bildet, gleich ist Null, das heißt, daß die Bahn vertikal verläuft.

4. Verfahren nach irgend einem der Ansprüche 1, 2 oder 3, dadurch gekennzeichnet, daß die dem System erteilte Beschleunigung mittels Druckluft erhalten wird.

5. Verfahren nach irgend einem der Ansprüche 1, 2 oder 3 dadurch gekennzeichnet, daß die dem System erteilte Beschleunigung mit Hilfe einer elektromagnetischen Kraft erhalten wird.

6. Ortsfeste Einrichtung zum Durchführen des Verfahrens nach irgend einem der Ansprüche 1 bis 5, dadurch gekennzeichnet, daß sie in Kombination folgendes aufweist:

i*) ein Mittel (R), das bestimmt ist, um das System (Sc) zu enthalten, das Bedingungen einer Mikroschwerkraft unterworfen werden soll,

ii*) Mittel (Ac, B, C, E; Ca, E), die bestimmt sind, um das System einer Anfangsbeschleunigungsphase geeigneter Dauer in enem Gravitationsfeld zu unterwerfen, um dieses einer ersten Wurfphase folgen zu lassen, welche jene Phase ist, während welcher das System eine Wurfbahn beschreibt und welche aus einer aufsteigenden Phase, die auf die Beschleunigungsphase folgt und aus einer absteigenden Phase besteht, wobei die Mittel (Ac, B, C, E; Ca, E) auch bestimmt sind, nach der ersten Wurfbahn dem System auf wiederholende Weise neue Beschleunigungsphasen zu erteilen, welche dieses neuen Wurfbahnen folgen lassen, wobei das Verhältnis zwischen der Dauer der Wurfphase und der Dauer der Beschleunigungsphase gleich ist dem Verhältnis zwischen der Größe der dem System erteilten Beschleunigung und der Größe der Gravitationsbeschleunigung,

iii*) Mittel ($T_1/L_1$, $T_2/L_2$, D; S, $M_2$, I) zum Erfassen der Bewegungsrichtung des Systems, wenn sich dieses in den aufsteigenden und absteigenden Phasen jeder Wurfbahn befindet, wobei die Mittel zum Erfassen das Einsetzen der Mittel ii*) zu dem Ende jeder absteigenden Phase auslösen.

7. Einrichtung nach Anspruch 6, dadurch gekennzeichnet, daß die Mittel, um dem System eine Beschleunigung wiederholend zu erteilen eine Drucklufteinrichtung aufweisen, die durch eine Düse (B) auf das System gelenkt wird, die vertikal gerichtet ist (so, daß sie das System einer vertikalen Bahn folgen läßt) und deren Durchtritt mittels eines Ventils (V) gesteuert wird, das zu dem Ende jeder absteigenden Phase durch die Mittel zum Erfassen betätigt wird und während der für den Behälter (R) zum Erlangen der erforderlichen Beschleunigung notwendigen Zeit aufrechterhalten wird.

8. Einrichtung nach Anspruch 7, dadurch gekennzeichnet, daß die Mittel zum Erfassen zwei Richtungssensoren für die Bewegung des das System enthaltenden Behälters (R) aufweisen, die aus zwei verschiedenen Einrichtungen, in vertikaler Ausrichtung angeordneten Lichtquelle/Phototransistor ($L_1/T_1$,$L_2/T_2$) bestehen, wobei die Lichtquellen ($L_1/L_2$) und die Phototransistoren ($T_1$, $T_2$) bezüglich der vertikalen Bahn des Behälters (R) beidseitig so angebracht sind, daß folgendes erfaßt wird: der erste Durchgang dieses letzteren, wenn er sich in der aufsteigenden Phase befindet und sodann sein zweiter Durchgang, wenn er sich in der absteigenden Phase befindet, wobei die Erfassung des zweiten Durchgangs während eines Zeitintervalls ($\tau_f$) einen Verzögerer ($T_f$) auslöst, das gleich der Zeit ist, die zwischen dem Augenblick, zu dem sich dieser zweiter Durchgang erfolgt und dem Ende der absteigenden Phase verstreicht, wenn eine Einrichtung (C) zum Steuern das Ventil (V, Elektroventil) für eine Steuerung des Luftdurchtritts aktiviert wird, um dieses Ventil zu öffnen und es während eines Zeitintervalls ($\tau_1$) geöffnet zu halten, das notwendig ist, um dem Behälter (R) die erforderliche Beschleunigung zu erteilen.

9. Einrichtung nach irgendeinem der Ansprüche 7 oder 8, dadurch gekennzeichnet, daß die Mittel (Ac, B, C, V) um dem Behälter (R), welcher die Kultur von Zellen in Suspension enthält, die Bescheunigung zu erteilen, mit Mitteln (G) zum Empfangen des Behälters (R) zu dem Ende der absteigenden Phase und zum vertikalen Fähren dieses Behälters unter der Wirkung der Strömung von Druckluft zusammenwirken, die folgendes aufweisen: einen Sitz (S), der bestimmt ist, um den Behälter aufzunehmen und zentral durchgebohrt ist, um das Durchströmen der Druckluft zu ermöglichen sowie Federn ($M_1$) zum Tragen dieses Sitzes, die symmetrisch um die vertikale Bahn angeordnet sind und an einem Rahmen (U) zum Tragen der Richtungssensoren ($L_1/T_1$, $L_2/T_2$) befestigt sind.

10. Einrichtung nach Anspruch 6, dadurch gekennzeichnet, daß die Mittel, um dem System eine Beschleunigung wiederholend zu erteilen, einen Elektromagneten (E) aufweisen, der auf eine bewegliche Stange (N) wirkt, die mit der vertikalen Bahn ausgerichtet ist, welcher der das System enthaltende Behälter (R) folgt.

11. Einrichtung nach Anspruch 10, dadurch gekennzeichnet, daß die Mittel zum Erfassen in Kombination folgendes aufweisen:
einen Sitz (S), der an dem oberen Ende der beweglichen Stange (N) befestigt ist und bestimmt ist, um den Behälter (R) zu dem Ende der absteigenden Phase aufzunehmen,
eine Feder ($M_2$), die ebenso mit der vertikalen Bahn ausgerichtet ist, wie die bewegliche Stange (N) des Elektromagneten (E) und mit dem unteren Ende dieser Stange verbunden ist, wobei das untere Ende dieser Feder ($M_2$) mit dem Rahmen der Einrichtung verbunden ist.

# FIG.1

# FIG.2

# FIG. 3

# FIG. 4